# FASCICULE DE BREVET EUROPEEN

(11) **EP 2 773 826 B1**
(45) Date de publication et mention de la délivrance du brevet: **11.05.2016**
(21) Numéro de dépôt: 12787801.5
(22) Date de dépôt: 23.10.2012
(51) Int. Cl.: H01L 31/042, F24J 2/36, E04H 15/54, H02S 30/20

(54) **SYSTEME DE MONTAGE D'UN PANNEAU PHOTOVOLTAÏQUE SOUPLE**
SYSTEM ZUM BEFESTIGEN EINES FLEXIBLEN FOTOVOLTAIKPANEELS
SYSTEM FOR MOUNTING A FLEXIBLE PHOTOVOLTAIC PANEL

(30) Priorité: 04.11.2011 FR 1160034
(43) Date de publication de la demande: 10.09.2014
(73) Titulaire: Serge Ferrari SAS, 38110 Saint Jean de Soudain (FR)
(72) Inventeur: BARIL, Sébastien, F-73000 Bassens (FR); SAIZ, Carlos, F-73190 Challes Les Eaux (FR)
(74) Mandataire: Cabinet Laurent & Charras
(86) Numéro de dépôt international: PCT/FR2012/052419
(87) Numéro de publication internationale: WO 2013/064766

(56) Documents cités:
- WO-A1-01/94719
- JP-A- 10 144 947
- JP-A- 2011 060 794
- JP-A- 2011 181 566
- JP-A- 2012 033 681

## Description

### DOMAINE TECHNIQUE

L'invention concerne le domaine de la production d'énergie électrique au moyen de cellules photovoltaïques. Elle vise plus particulièrement les panneaux photovoltaïques souples et enroulables destinés à être rapportés sur des surfaces telles que des toiles tendues.

Elle concerne plus précisément le système de montage et de maintien en position d'un panneau photovoltaïque souple sur une toile tendue ou un film.

### ART ANTERIEUR

De la façon générale, il est en effet connu de réaliser une solidarisation entre un panneau photovoltaïque souple et une toile tendue ou un film.

On connaît ainsi des composites enroulables tels que décrit dans le document FR 2935540 dans lequel un panneau photovoltaïque souple est solidarisé à la toile d'un store-banne de façon à la fois à générer une zone d'ombre située en dessous de la toile et produire de l'énergie électrique grâce aux cellules photovoltaïques positionnées à sa surface.

Cependant, dans ce cas le panneau photovoltaïque souple est laminé à chaud avec la toile. Un tel assemblage présente alors une grande rigidité et l'ensemble des efforts auxquels est soumise la toile est transmis au panneau photovoltaïque souple. En outre, les efforts en traction transmis au panneau photovoltaïque peuvent causer une rupture et donc une défaillance d'une pluralité de cellules photovoltaïques le composant.

Un premier objectif de l'invention est de réaliser une couche intermédiaire de liaison à la jonction entre le panneau photovoltaïque souple et la toile tendue ou film. Une telle couche intermédiaire permet alors d'absorber tout ou partie des efforts en traction transmis par la toile tendue.

Par ailleurs, tel que décrit dans le document WO 01/94719, on connait également des systèmes de montage dans lesquels le panneau photovoltaïque est solidarisé par collage sur toute sa surface avec une nappe de textile enduit destinée à être rapportée également par collage sur un support.

Cependant, comme précédemment, un tel assemblage sur toute la surface du panneau photovoltaïque ne permet pas une liberté de dilatation pour le panneau photovoltaïque souple. De plus, le transfert de chaleur par conduction est dans ce cas très important au niveau de la zone active du panneau photovoltaïque constamment en contact avec la nappe textile enduit.

Ainsi un second objectif de l'invention est de limiter les transferts thermiques par conduction entre le panneau photovoltaïque souple et la nappe de textile enduit agencée en regard.

On connait également des systèmes de montage tels que décrits dans le document JP 2011 060794, et dans lesquels un panneau photovoltaïque souple est collé sur toute sa surface sur une feuille de renfort. Cette feuille de renfort est ensuite rapportée sur un support tel une toiture de tente et maintenue en position par rapport à la tente au moyen d'une pluralité de feuilles de fixation collées à la toile de tente et des éléments de connexion. Un tel type de montage permet ainsi de compenser les différences de variations dimensionnelles dues à la dilatation thermiques des matériaux formant le support et l'ensemble composé du panneau photovoltaïque souple et de la feuille de renfort.

Cependant un tel montage n'est optimum et ne permet en outre aucune compensation de dilatation thermique entre la cellule photovoltaïque et la feuille de renfort sur laquelle elle est entièrement collée. De même aucune lame d'air n'est décrite dans ce document entre la cellule photovoltaïque souple et la feuille de renfort. Ainsi, un tel montage ne permet pas de garantir une faible conduction thermique entre le panneau photovoltaïque souple et la feuille de renfort.

De plus, le montage décrit dans le document JP 2011 060794 est complexe à effectuer pour un opérateur qui doit en effet solidariser individuellement chacune des feuilles de fixation avec la toile de tente. Une telle solidarisation est ainsi longue et complexe à réaliser car chaque feuille de fixation doit être positionnée avec précision sur la toile de tente à la fois en termes de localisation et d'orientation pour permettre la mise en place ultérieure des éléments de connexion. Un tel système de montage nécessite donc un temps de mis en place très important.

Un autre objectif de l'invention est donc de faciliter la mise en place et la solidarisation d'un panneau photovoltaïque souple avec une toile tendue.

On connait enfin des systèmes de montage tels que décrits dans le document JP 10 144 947 dans lesquels les cellules photovoltaïques sont noyées dans une feuille de résine polymérique, avantageusement renforcée au moyen de fibres de haute ténacité, ledit élément intermédiaire étant consu sur une structure de construction type toile tendue. Un tel système de montage ne permet cependant pas d'absorber efficacement les efforts en traction transmis au panneau photovoltaïque lorsque la toile est tendue, ni ne propose de solution permettant de remédier au problème technique relatif aux transferts thermiques par conduction entre le panneau photovoltaïque souple et l'élément intermédiaire.

### EXPOSE DE L'INVENTION

L'invention vise donc un système de montage d'un panneau photovoltaïque souple sur une toile tendue, un tel panneau photovoltaïque souple étant destiné à recouvrir au moins partiellement une face endroit de la toile tendue. De plus, le système de montage comporte un élément intercalaire comportant :
- une nappe textile enduite sur ses deux faces et ;
- une couche d'adhésif destinée à permettre une solidarisation de la nappe textile avec ladite face endroit de la toile tendue.

Selon l'invention, le système de montage se caractérise en ce que le panneau photovoltaïque souple est solidarisé avec l'élément intercalaire au niveau d'une zone inactive du panneau photovoltaïque souple_et en ce que le système de montage comporte une lame d'air agencée entre une zone active du panneau photovoltaïque souple et la nappe textile enduite.

Autrement dit, le système de montage comporte une superposition de deux éléments formés par la nappe textile enduite et la couche d'adhésif.

Une telle couche d'adhésif permet ainsi de positionner le panneau photovoltaïque souple sur une surface qui peut être plane ou gauche, directement à son contact, et en étant maintenue en position sans nécessiter de moyen de maintien en position annexe.

La nature et la composition chimique de cette couche d'adhésif peuvent être très variées et fonctions du matériau utilisé pour réaliser la nappe textile ou de la nature du support. Elles permettent en outre d'absorber d'éventuelles déformations de la toile tendue ou du film sur laquelle une nappe textile enduite est rapportée.

De plus, en solidarisant la cellule photovoltaïque souple avec la nappe textile enduite uniquement au niveau d'une zone inactive de celle-ci, une lame d'air est alors formée en dessous de la zone active de cette cellule photovoltaïque. Une telle lame d'air forme alors une couche d'isolation thermique et permet ainsi de limiter la conduction thermique entre la zone active de la cellule photovoltaïque souple et la nappe textile en regard.

En pratique, la lame d'air peut présenter une épaisseur comprise entre 1 et 20 mm.

Une telle épaisseur de lame d'air permet alors de générer une résistance thermique comprise entre 0.001 (m².K)/W et 0.1 (m².K)/W.

Selon un premier mode de réalisation particulier, le panneau photovoltaïque souple peut être solidarisé par un fil de couture périphérique avec l'élément intercalaire.

Ainsi, un tel fil de couture périphérique peut également permettre d'absorber les déformations de nappe textile enduite générées par les déformations de la toile tendue en regard.

En pratique, le fil de couture périphérique peut former un motif en zigzag ou une double couture droite. Un tel point de couture permet en effet de garantir la solidarisation entre la nappe textile enduite et le panneau photovoltaïque souple quelles que soient les orientations des sollicitations en cisaillement des fils de couture dans le plan défini par le contact entre ces deux éléments.

Selon un second mode de réalisation, le panneau photovoltaïque souple peut être solidarisé par une soudure périphérique avec l'élément intercalaire.

Dans ce cas, la soudure périphérique permet uniquement de solidariser les deux éléments entre eux et ne participe pas à l'absorption des déformations de la nappe textile endúite.

Avantageusement, la nappe de textile enduite peut comporter en chaîne et/ou en trame des fils formés dans un matériau présentant un module d'Young supérieur à 60 GPa.

En effet, le module d'Young permet de caractériser la capacité du matériau à s'allonger dans un sens longitudinal à savoir lors d'une déformation générée selon une sollicitation en traction du matériau. A titre d'exemple, le verre ou le carbone peuvent être utilisés de façon à former les fils de la nappe textile enduite. De tels matériaux ont en effet une grande résistance à la traction ainsi qu'une faible élongation lors d'un essai de traction.

Selon un mode de réalisation particulier, l'une au moins d'une couche d'enduction de la nappe textile enduite peut être formée dans un matériau choisi parmi le groupe comportant les silicones, le polychlorure de Vinyle (PVC), l'Ethylene chlorotrifluoroethylene (ECTFE), et l'Ethylene tetrafluoroethylene (ETFE).

En effet, de tels matériaux sont des isolants thermique qui dégradent ainsi la transmission de chaleur par conduction entre, d'une part, le panneau photovoltaïque souple et la nappe textile enduite, et d'autre part, la nappe textile enduite et la toile tendue en regard.

De plus, lorsque l'une au moins des couches d'enduction est formée dans du silicone, l'assemblage du panneau photovoltaïque souple avec la toile tendue présente de bonnes caractéristiques de résistance au feu et permet alors de classer un tel assemblage intégrant un panneau photovoltaïque souple selon la classification M0, M1 ou M2 conformément à la norme NF P92.505 ou selon les classes A , B ou C des nouvelles euroclasses de la norme EN 13501-1.

La couche d'enduction de la nappe textile enduite peut également favoriser l'accroche de la couche d'adhésif à la surface de la nappe textile et garantir sa bonne tenue dans le temps.

Selon un premier mode de réalisation, la couche d'adhésif peut être sensible à la pression et repositionnable.

De cette manière, il est alors possible de positionner le panneau photovoltaïque souple sur une toile tendue pour répondre à un besoin ponctuel. Il est ensuite possible de les désolidariser pour permettre le rangement du panneau photovoltaïque souple avec son système de montage.

Selon un second mode de réalisation, la couche d'adhésif peut-être permanente. Un tel mode réalisation est en effet avantageux lorsque le panneau photovoltaïque souple est agencé dans un lieu sensible, et ce, afin notamment d'éviter un vol du panneau.

Dans les deux cas de figures, une telle couche d'adhésif peut notamment être déposée sur la nappe textile enduite par voie liquide mais également par pulvérisation au moyen d'une bombe aérosol notamment

En pratique, l'élément intercalaire peut comporter une couche de protection disposée sur la couche d'adhésif au niveau d'une face destinée à coopérer avec la toile tendue, la couche de protection étant formée par une feuille présentant une force d'adhérence limitée avec la couche d'adhésif.

Une telle couche de protection permet ainsi de maintenir inactive la couche d'adhésif notamment lors du transport, du stockage ou de la commercialisation du panneau photovoltaïque souple avec son système de montage.

Selon un mode de réalisation particulier, l'une au moins des couches d'enduction peut être apte à se rétracter pour d'une part, épouser de façon substantielle la périphérie d'un élément longiligne agencé au travers de l'élément intercalaire, et d'autre part, réaliser l'étanchéité de l'élément intercalaire une fois l'élément longiligne retiré.

De telles couches d'enduction peuvent notamment être réalisées dans un matériau tel que la mousse de silicone comportant une grande capacité de déformation et permettant notamment à la connectique du panneau photovoltaïque souple de traverser la nappe textile sans générer de problème d'étanchéité à l'eau.

### DESCRIPTION SOMMAIRE DES FIGURES

La manière dont l'invention peut être réalisée et l'avantage qui en découle ressortiront mieux de l'exemple de réalisation qui suit, donné à titre indicatif et non limitatif, à l'appui des figures annexées dans lesquelles :
- la figure 1 est une vue en perspective d'un panneau photovoltaïque souple associé à un système de montage conforme à l'invention ;
- la figure 2 est une vue en coupe transversale d'une telle association selon la figure 1 ;
- la figure 3 est une vue en coupe partielle correspondant à un grossissement de la figure 2.

### DESCRIPTION DETAILLEE DE L'INTENTION

Comme déjà évoqué, l'invention concerne un système de montage d'un panneau photovoltaïque souple sur une toile tendue. Un tel système permet ainsi au panneau photovoltaïque souple d'être enroulé sur lui-même lors de son stockage ou de son transport.

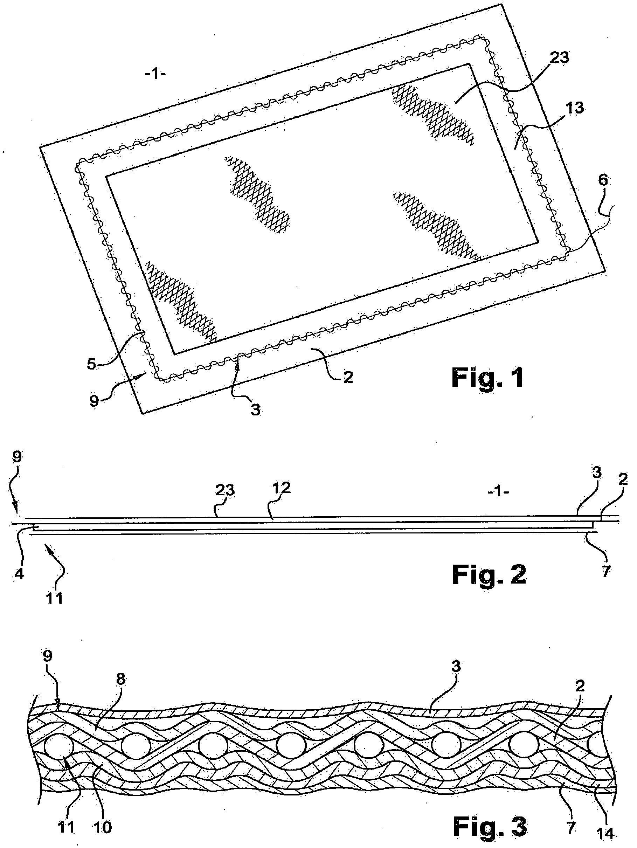

Tel que représenté à la figure 1, dans une position déployée, le système de montage comporte une nappe textile enduite **2** présentant une face endroit **9** sur laquelle est rapportée un panneau photovoltaïque souple **3**. Un tel ensemble **1** constitue ainsi un élément indépendant apte à être rapporté sur toute toile tendue.

Tel que représenté, la solidarisation entre le panneau photovoltaïque souple **3** et la nappe textile enduite **2** peut être réalisée par une couture au moyen d'un fil de couture **5** traversant l'épaisseur des deux éléments. Cependant, dans d'autres variantes non présentées, une telle solidarisation peut également être réalisée par soudure ou collage notamment.

Dans cette variante, un tel fil de couture **5** peut notamment décrire un motif en zigzag de façon à assurer une bonne résistance au cisaillement dans un plan parallèle à la face endroit **9** de la nappe textile **2** Un tel motif en zigzag permet également d'absorber tout ou partie des déformations de la nappe textile enduite et de ne pas les transmettre au panneau photovoltaïque souple **3**. Dans d'autres variantes, non représentées, le fil de couture peut également décrire un motif rectiligne ou droit.

Tel que représenté le fil de couture **5** pénètre à travers du panneau photovoltaïque souple **3** au niveau d'une zone inactive **13** de façon à solidariser le panneau photovoltaïque souple **3** avec la nappe textile enduite **2**. Un tel mode de réalisation permet alors de conférer à une zone active **23** du panneau photovoltaïque souple une liberté de dilation vis-à-vis de la nappe textile **2** en regard.

Un fil d'alimentation formant un élément longiligne **6** émerge du panneau photovoltaïque **3** de façon à transmettre l'électricité produite par le panneau photovoltaïque souple.

Tel que représenté à la figure 2, une lame d'air **12** est positionnée entre la zone active **23** du panneau photovoltaïque souple **3**. Une telle lame d'air **12** permet ainsi de limiter les échanges thermiques par conduction entre la zone active **23** et la nappe textile **2** en regard.

Par ailleurs, le système de montage comporte également, au niveau d'une face envers **11** de la nappe textile enduite **2**, une couche d'adhésif **4** permettant de maintenir en position le panneau photovoltaïque souple sur une surface annexe non représentée, d'une toile tendue ou film. Une telle couche d'adhésif **4** peut être de différente nature, elle peut ainsi être de type sensible à la pression et repositionnable de façon à permettre une solidarisation réversible du panneau photovoltaïque souple avec une toile tendue.

Ainsi, un tel système de montage permet de procéder à la désolidarisation du panneau photovoltaïque souple avec la surface d'une toile tendue pour notamment permettre son rangement temporaire lorsqu'il n'est pas utilisé pour produire de l'énergie électrique.

De plus, une couche de protection **7** peut être positionnée à la surface libre de la couche d'adhésif **4**. Une telle couche de protection permet alors au panneau photovoltaïque souple d'être enroulé sur lui-même avec son système de montage sans que la couche d'adhésif **4** vienne au contact du panneau photovoltaïque souple **3**.

Une telle couche de protection peut notamment être formée par un film qui est retiré pour permettre le positionnement et la solidarisation des panneaux photovoltaïques souples sur la surface de la toile tendue.

Par ailleurs, tel que représenté à la figure 3, le panneau photovoltaïque souple peut comporter une nappe textile enduite **2** formée par un tissu de fils agencé en chaînes et trame et recouvert par une première couche d'enduction **8** au niveau de la face endroit de la nappe textile enduite **2**, et une seconde couche d'enduction **10** agencée au niveau de la face envers **11** de la nappe textile **2**.

De telles couches d'enduction peuvent notamment permettre de garantir une bonne adhérence du panneau photovoltaïque souple **3** ou de la couche d'adhésif **14**. En effet, la force d'adhésion de la couche d'adhésif **14** avec la seconde couche d'enduction **10**, est avantageusement choisie supérieure à la force d'adhésion de la couche de protection **7** avec la couche d'adhésif **14**.

Ainsi, lorsque la couche de protection **7** est retirée l'intermédiaire la couche d'adhésif **14** reste solidaire de la seconde couche d'enduction **10.**

Pailleurs, la couche d'adhésif **14** peut être de type permanent pour certaines applications où le panneau photovoltaïque souple ne doit pas être démonté de la surface avec laquelle il coopère. Un tel mode de réalisation permet notamment d'éviter le vol du panneau photovoltaïque.

De telles première et seconde couches d'enduction **8, 10** peuvent notamment présenter des caractéristiques d'élasticité de façon à se rétracter et épouser de façon substantielle la périphérie d'un élément longiligne formant un câble d'alimentation électrique. Ces couches d'enduction **8, 10** sont également aptes à se rétracter si l'élément longiligne est extrait de la nappe textile enduite **2** notamment pour des raisons de maintenance ou de remplacement du panneau photovoltaïque souple.

Il ressort de ce qui précède qu'un système de montage d'un panneau photovoltaïque souple conforme à l'invention présente de nombreux avantages et, notamment :
- il permet d'absorber tout ou partie des déformations de la toile tendue formant support ;
- il permet de procéder au positionnement d'un panneau photovoltaïque souple sur toute toile tendue déjà existante
- il permet au panneau d'être retiré et stocké lorsqu'il n'est pas utilisé pour produire de l'énergie électrique ;
- il peut présenter une bonne résistance à l'inflammabilité en utilisant des matériaux adaptés pour réaliser les couches d'enduction de la nappe textile enduite.

## Revendications

1. Système de montage d'un panneau photovoltaïque souple (3) sur une toile tendue, ledit panneau photovoltaïque souple (3) étant destiné à recouvrir au moins partiellement une face endroit de ladite toile tendue, ledit système de montage comportant un élément intercalaire comportant :
- une nappe textile enduite (2) sur ses deux faces et ;
- une couche d'adhésif (4, 14) destinée à permettre une solidarisation de la nappe textile enduite (2) avec ladite face endroit de la toile tendue ; ledit panneau photovoltaïque souple (3) étant solidarisé avec ledit élément intercalaire au niveau d'une zone inactive (13) du panneau photovoltaïque souple (3), ledit système de montage étant **caractérisé en ce qu'**il comporte une lame d'air (12) agencée entre une zone active (23) du panneau photovoltaïque souple (3) et ladite nappe textile enduite (2).

2. Système selon la revendication 1, caractérisé en que la lame d'air (12) présente une épaisseur comprise entre 1 et 20 mm.

3. Système selon la revendication 1, caractérisé en que le panneau photovoltaïque souple est solidarisé par un fil de couture périphérique (5) avec l'élément intercalaire.

4. Système selon la revendication 3, **caractérisé en ce que** le fil de couture périphérique (5) forme un motif en zigzag.

5. Système selon la revendication 1, caractérisé en que le panneau photovoltaïque souple est solidarisé par une soudure périphérique avec l'élément intercalaire.

6. Système selon la revendication 1, caractérisé en que la nappe de textile enduite (2) comporte en chaîne et/ou en trame des fils formés dans un matériau présentant un module d'Young supérieur à 60 GPa.

7. Système selon la revendication 1, **caractérisé en ce que** l'une au moins d'une couche d'enduction (8, 10) de la nappe textile enduite (2) est formée dans un matériau choisi parmi le groupe comportant les silicones, le poly chlorure de Vinyle (PVC), l'Ethylene chlorotrifluoroethylene (ECTFE), et l'Ethylene tetrafluoroethylene (ETFE).

8. Système selon la revendication 1, **caractérisé en ce que** la couche d'adhésif (4) est sensible à la pression et repositionnable.

9. Système selon la revendication 1, **caractérisé en ce que** la couche d'adhésif (14) est permanente.

10. Système selon la revendication 1, **caractérisé en ce que** l'élément intercalaire comporte une couche de protection (7) disposée sur la couche d'adhésif (4, 14) au niveau d'une face destinée à coopérer avec la toile tendue, ladite couche de protection (7) étant formée par une feuille présentant une force d'adhérence limitée avec la couche d'adhésif (4, 14).

11. Système selon la revendication 7, **caractérisé en ce que** l'une au moins des couches d'enduction (8, 10) de la nappe textile enduite (2) est apte à se rétracter pour, d'une part, épouser de façon substantielle la périphérie d'un élément longiligne (6) agencé au travers de l'élément intercalaire, et d'autre part, réaliser l'étanchéité de l'élément intercalaire une fois l'élément longiligne retiré.

## Patentansprüche

1. System zur Montage eines flexiblen Fotovoltaik-Paneels (3) auf einer gespannten Plane, wobei dieses flexible Fotovoltaik-Paneel (3) dazu bestimmt ist, zumindest teilweise eine Außenseite dieser Plane zu bedecken, dieses Montagesystem umfasst ein Zwischenelement, bestehend aus:
- einer beidseitig beschichten Gewebelage (2) und,
- einer Klebeschicht (4, 14) die die Solidarisierting der beschichteten Gewebelage (2) mit dieser Außenseite der gespannten Plane ermöglichen soll;
das genannte flexible Fotovoltaik-Paneel (3) ist mit diesem Zwischenelement in Höhe einer inaktiven Zone (13) des flexiblen Fotovoltaik-Paneels (3) verbunden und dieses Montagesystem ist **dadurch gekennzeichnet, dass** es eine Luftkammer (12) enthält, die zwischen einer aktiven Zone (23) des flexiblen Fotovoltaik-Paneels (3) und dieser beschichteten Gewebelage (2) eingerichtet ist.

2. System gemäß Anspruch 1, **dadurch gekennzeichnet, dass** die Luftkammer (12) eine Dicke zwischen 1 und 20 mm aufweist.

3. System gemäß Anspruch 1, **dadurch gekennzeichnet, dass** das flexible Fotovoltaik-Paneel durch einen Nahtfaden (5) an der Peripherie mit dem Zwischenelement verbunden ist.

4. System gemäß Anspruch 3, **dadurch gekennzeichnet, dass** der Nahtfaden (5) an der Peripherie ein Zick- Zack- Motiv bildet.

5. System gemäß Anspruch 1, **dadurch gekennzeichnet, dass** das flexible Fotovoltaik-Paneel durch eine periphere Naht (5) mit dem Zwischenelement verbunden ist.

6. System gemäß Anspruch 1, **dadurch gekennzeichnet, dass** die beschichtete Gewebelage (2) in Kette und/ oder Schuss Fäden enthält, die ein Young - Modul über 60 GPa aufweisen.

7. System gemäß Anspruch 1, **dadurch gekennzeichnet, dass** mindestens eine Beschichtungslage (8,10) der beschichteten Gewebelage (2) aus einem Material ausgewählt wird, das zu der Gruppe aus den Silikonen, Polyvinylchlorid (PVC), Ethylen- Chlortrifluorethylen (ECTFE) und Ethylen- Tetrafluorethylen (ETFE) gehört.

8. System gemäß Anspruch 1, **dadurch gekennzeichnet, dass** die Klebeschicht (4) druckempfindlich und repositionierbar ist.

9. System gemäß Anspruch 1, **dadurch gekennzeichnet, dass** die Klebeschicht (14) permanent ist.

10. System gemäß Anspruch 1, **dadurch gekennzeichnet, dass** das Zwischenelement eine Schutzschicht (7) aufweist, aufgebracht auf der Klebeschicht (4, 14), in Höhe einer Seite, die mit der gespannten Plane zusammenwirkt, diese Schutzschicht (7) besteht aus einer Folie, die eine begrenzte Adhäsionskraft mit der Klebeschicht (4, 14) aufweist.

11. System gemäß Anspruch 1, **dadurch gekennzeichnet**, das mindestens eine der Beschichtungslagen (8, 10) der beschichteten Gewebelage (2) in der Lage ist, sich zusammenzuziehen, um sich einerseits deutlich an die Peripherie eines länglichen Elementes (6) anzuschmiegen, dass durch das Zwischenelement hindurch angeordnet ist und zweitens für die Dichtigkeit des Zwischenelementes zu sorgen, sobald das längliche Element herausgezogen wurde.

## Claims

1. System for the assembly of a flexible photovoltaic panel (3) on a stretched fabric with the said flexible photovoltaic panel (3) intended to cover at least partially one upper face of the said stretched fabric, the said assembly system comprising an interposed component including:
- a textile layer (2) coated on both sides and;
- an adhesive coat (4, 14) designed to allow the integration of the coated textile layer (2) with the said upper face of the stretched fabric;
the said flexible photovoltaic panel (3) being made integral with the said interposed component in an inactive zone (13) of the flexible photovoltaic panel (3) the said assembly system being **characterized in that** it includes a layer of air (12) arranged between an active zone (23) of the flexible photovoltaic panel (3) and the said coated textile layer (2).

2. System according to claim 1, **characterized in that** the layer of air (12) has a thickness included between 1 and 20 mm.

3. System according to claim 1, **characterized in that** the flexible photovoltaic panel is made integral with the interposed component by a peripheral stitching yarn (5).

4. System according to claim 3, **characterized in that** the peripheral stitching yarn (5) forms a zigzag pattern.

5. System according to claim 1, **characterized in that** the flexible photovoltaic panel is made integral with the interposed component by a peripheral weld.

6. System according to claim 1, **characterized in that** the coated textile layer (2) includes a warp and weft arrangement of yarns formed in a material having a Young's modulus in excess of 60 GPa.

7. System according to claim 1, **characterized in that** at least one coating layer (8, 10) of the coated textile layer (2) is made of a material chosen from the group including silicones, polyvinyl chloride (PVC) ethylene chlorotrifluoroethylene (ECTFE) ethylene tetrachloroethylene (ETFE).

8. System according to claim 1, **characterized in that** the adhesive coat (4) is pressure-sensitive and repositionable.

9. System according to claim 1, **characterized in that** the adhesive coat (4) is permanent.

10. System according to claim 1, **characterized in that** the interposed component includes a protection layer (7) arranged over the adhesive coat (4, 14) on one side designed to work together with the stretched fabric, the said protection coat (7) consisting of a sheet having a limited adherence force with the adhesive coat (4, 14).

11. System according to claim 7, **characterized in that** at least one of the coating layers (8, 10) of the coated textile layer (2) is capable of shrinking in order to, on the one hand, match closely the perimeter of a long linear component (6) arranged through the interposed component, and on the other hand, provide sealing for the interposed component once the long linear component has been removed.
